Europäisches Patentamt

European Patent Office

Office européen des brevets

(11) Veröffentlichungsnummer : **0 090 830**
**B1**

(12) **EUROPÄISCHE PATENTSCHRIFT**

(45) Veröffentlichungstag der Patentschrift :
15.05.85

(21) Anmeldenummer : **82903040.2**

(22) Anmeldetag : **20.09.82**

(86) Internationale Anmeldenummer :
**PCT/DE 82/00204**

(87) Internationale Veröffentlichungsnummer :
**WO/8301122 (31.03.83 Gazette 83/08)**

(51) Int. Cl.⁴ : **G 02 B   5/00,** E 06 B   9/24

(54) **SONNENSCHUTZEINRICHTUNG.**

(30) Priorität : **25.09.81 DE 3138262**
**16.07.82 DE 3226709**

(43) Veröffentlichungstag der Anmeldung :
**12.10.83 Patentblatt 83/41**

(45) Bekanntmachung des Hinweises auf die Patenterteilung : **15.05.85 Patentblatt 85/20**

(84) Benannte Vertragsstaaten :
**AT CH DE FR GB LI NL**

(56) Entgegenhaltungen :
**DE-A- 1 906 990**
**DE-A- 2 732 592**
**FR-A- 2 185 743**
**FR-A- 2 463 254**

(73) Patentinhaber : **Siemens Aktiengesellschaft**
**Berlin und München Wittelsbacherplatz 2**
**D-8000 München 2 (DE)**
**DE**
**BARTENBACH, Christian**
**Rinnerstrasse 39**
**A-6020 Innsbruck-Aldrans (AT)**
**CH FR GB LI NL AT**

(72) Erfinder : **BARTENBACH, Christian**
**Rinnerstrasse 39**
**A-6020 Innsbruck-Aldrans (AT)**

## Beschreibung

Die Erfindung betrifft eine Sonnenschutzeinrichtung in Form von Lamellen aus lichtdurchlässigem Material, die auf der einen Seite eine ebene Basisfläche und auf der anderen Seite eine prismatische Struktur haben und die in einer Fensteröffnung nebeneinander um parallele Längsachsen drehbar angeordnet sind.

Eine wirksame Sonnenschutzeinrichtung muß berücksichtigen, daß sich der Einfallswinkel des Sonnenlichtes abhängig von Tages- und Jahreszeit in einem sehr großen Bereich ändert. Dieser läßt sich mit bekannten, fest installierten Sonnenschutzeinrichtungen nur bei gleichzeitiger Abschirmung des erwünschten Tageslichtes überstreichen. Im Interesse einer besseren Nutzung des Tageslichtes ist daher bei einer aus der DE-OS 16 83 284 bekannten Sonnenschutzeinrichtung eine Änderung der Neigung der Lamellen, abhängig von der Sonnenhöhe, während eines Tages vorgesehen. Die Lamellen weisen dabei auf der Innenseite eine Vielzahl von Einzelprismen auf (Tripel-Spiegel), woraus ein im wesentlichen kreisförmiger Ausblendbereich mit einem Grenzwinkel von etwa 45° resultiert : Damit läßt sich aber die Sonnenstrahlung vor- und nachmittags nicht vollständig ausblenden.

Bei einer Sonnenschutzeinrichtung nach der DE-OS 19 06 990 sind dagegen die Lamellen um vertikale Achsen drehbar angeordnet und werden dem jeweiligen Sonnenstand während eines Tages durch einen motorischen Antrieb nachgeführt. Die einzelnen Lamellen haben dabei eine feste Neigung gegen die Horizontale, die etwa dem jeweiligen Breitengrad entspricht, womit sich zumindest in der Mittagszeit eine vollständige Ausblendung der Sonne unabhängig von der Jahreszeit erreichen läßt.

Dagegen muß eine Sonneneinstrahlung in den Morgen- und Abendstunden in der Umgebung der Sommer- und Wintersonnenwende in Kauf genommen werden. Schwerwiegender ist jedoch die aufwendige Mechanik und Steuerung, die für die Nachführung der einzelnen Lamellen während des Tages sorgt. Schließlich hat der etwa kreisförmige Ausblendbereich zur Folge, daß auch ein großer Anteil des Zenitlichtes von den Lamellen nach außen reflektiert wird und nicht in den Raum eintreten kann.

Der Erfindung liegt daher die Aufgabe zugrunde, die Lichtdurchlässigkeit einer Sonnenschutzeinrichtung der eingangs genannten Art bei effektiverer Ausblendung der Sonne und einfacherem Aufbau zu verbessern.

Die erfindungsgemäße Lösung dieser Aufgabe ist im Anspruch 1 gekennzeichnet. Vorzugsweise besteht jede Lamelle aus einer größeren Anzahl von mit den Kathetenflächen lückenlos aneinanderstoßenden Prismenstäben.

Die Erfindung ist unabhängig von der Neigung und Ausrichtung einer Fensterfläche wirksam, also insbesondere auch im Rahmen von Dachfenstern mit Erfolg anwendbar. Hierbei ist es zweckmäßig, die Achsen senkrecht zur Nord-Süd-Richtung zu orientieren.

Die Erfindung wird anhand der Figuren näher erläutert ; es zeigen

Figur 1 das Besonnungsdiagramm einer Horizontalfläche,

Figur 2 schematisch die erfindungsgemäße Sonnenschutzeinrichtung,

Figur 3 einen Querschnitt entlang Linie III-III durch eine Lamelle der Fig. 2,

Figur 4 die Zuordnung eines Koordinatensystems zu einem Prismenstab einer Lamelle und

Figur 5 das Ausblenddiagramm einer Lamelle.

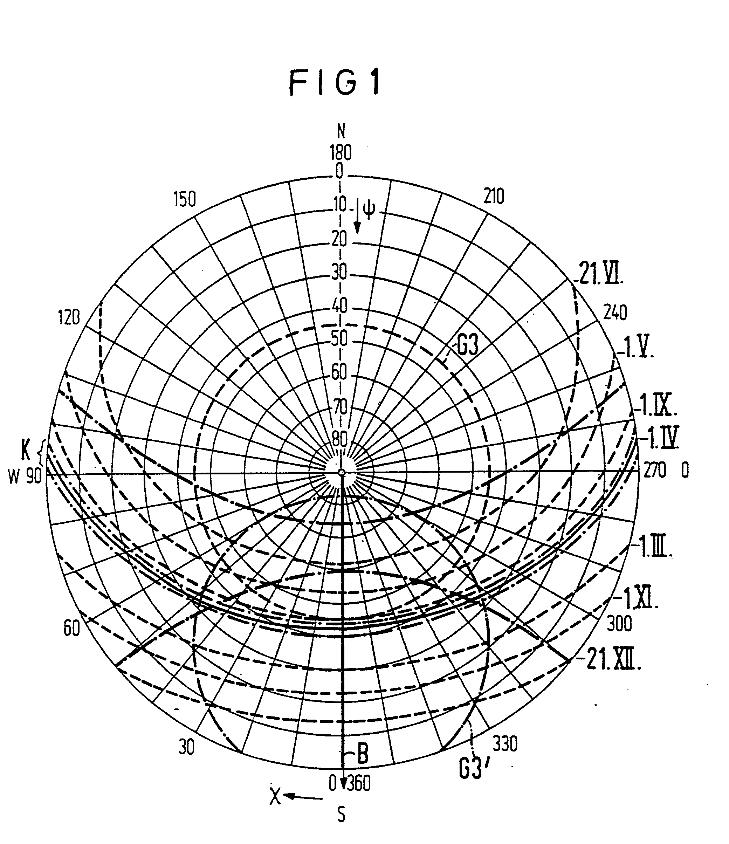

Das Besonnungsdiagramm in Fig. 1 zeigt die Abhängigkeit des Höhenwinkels $\Psi$ — also des auf eine Horizontalebene bezogenen Einfallswinkels der Sonnenstrahlen — von Tages- und Jahreszeit. Die Höhenwinkel $\Psi$ sind dabei als konzentrische Kreise und die Azimutwinkel $\chi$ als sie senkrecht schneidende Radien — ausgehend von einer nach Süden orientierten Bezugsachse B — dargestellt : Am 1. April (ausgezogene Bahnkurve) haben beispielsweise die Sonnenstrahlen bei einer Azimutalebene senkrecht zu der Zeichenebene mit einem Azimutwinkel $\chi$ von 290° einen Höhenwinkel $\Psi$ von etwa 20°.

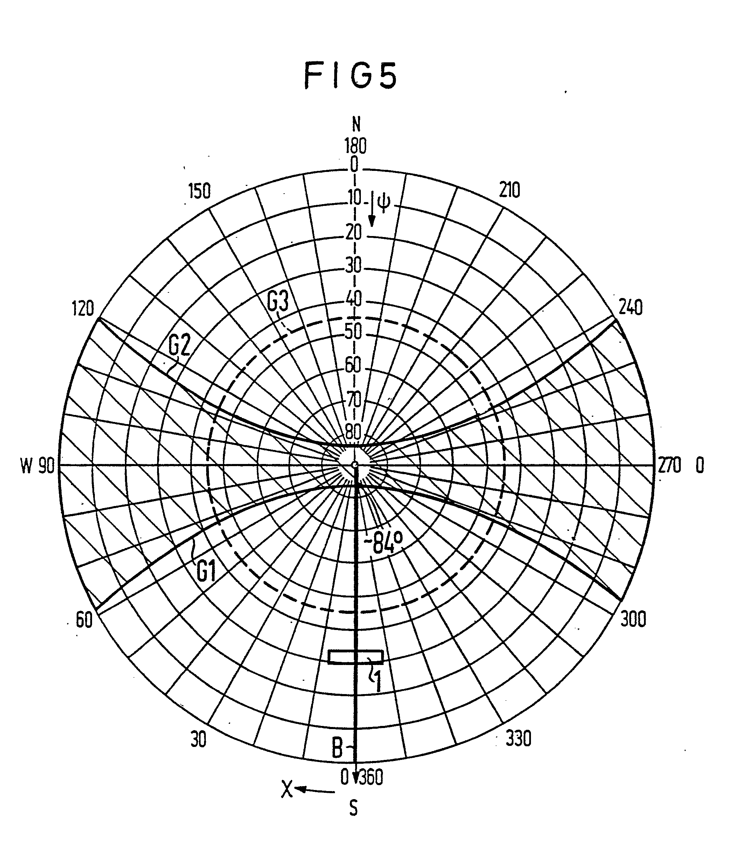

Für jede — beliebig orientierte — Sonnenschutzeinrichtung läßt sich nun mit denselben Koordinaten ein Ausblenddiagramm — vergleiche Fig. 5 für die Erfindung — zeichnen, das den Ausblendbereich darstellt ; dieser ist in Fig. 5 für senkrecht zur Nord-Süd-Richtung verlaufende Prismen schraffiert dargestellt. Der Ausblendbereich zeigt an, bis zu welchem Azimut- und Höhenwinkel (bezogen auf eine horizontale Basisfläche) einfallende Lichtstrahlen von der Sonnenschutzeinrichtung wieder nach außen reflektiert werden. Licht, das außerhalb des Ausblendbereiches einfällt, wird in den zu schützenden aber möglichst gut mit Tageslicht auszuleuchtenden Raum hindurchgelassen.

Die Erfindung basiert nun auf der Einsicht, daß die Durchlässigkeit einer Sonnenschutzeinrichtung für Tageslicht umso besser ist, je kleiner die Fläche des Ausblendbereiches ist. Im Idealfall brauchte der Ausblendbereich nur ein ganz schmaler Korridor K sein, in dessen Mitte die Bahnkurve eines Tages liegt (vgl. die Bahnkurve des 1. April in Fig. 1) : Hierbei wäre dann eine vollständige Sonnenausblendung während des ganzen Tages bei weitgehend ungehindertem Tageslichtdurchgang gewährleistet.

Zum Vergleich hierzu ist in den Figuren 1 und 5 der Ausblendbereich der bekannten Lamellen mit pyramidenförmigen Einzelprismen dargestellt : Er ist kreisförmig und durch die gestrichelte Grenzkurve G3 begrenzt. Die Mitte dieses Ausblendbereiches läßt sich bei der Darstellung nach Fig. 1 durch ein Schrägstellen der Lamelle auf der Nord-Süd-Achse nach unten verschieben (Grenzkurve G3' strichpunktiert angedeutet), so daß die Sonnenschutzbedingung während des ganzen Jahres — und bei entsprechender Nachführung auch während des Tages — erfüllt ist. Zugleich ist jedoch erkennbar, daß die große Fläche des Ausblendbereiches im Bereich der Hauptarbeitszeit liegt, wo reduzierte Tageslichtdurchlässigkeit besonders stört. Auffällig ist dabei, daß die Kreisform des Ausblendbereiches nicht die entfernteste Ähnlichkeit mit der idealen « Kreisringform » des Ausblendkorridors K hat.

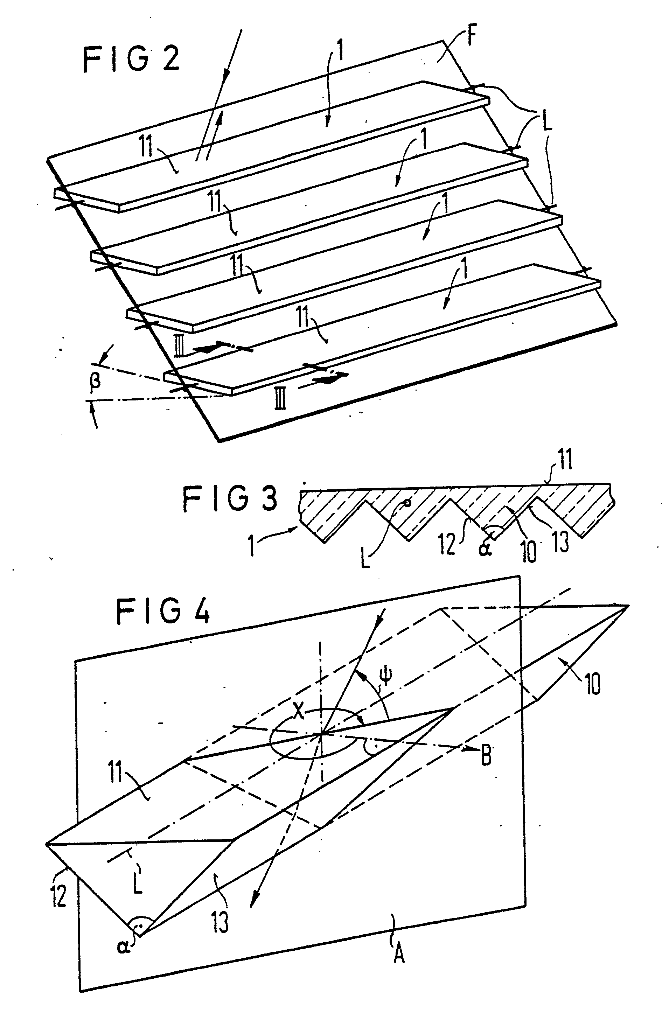

Die Erfindung beruht nun auf der weiteren Erkenntnis, daß die Form des Ausblendbereiches der in den Fig. 2 bis 4 dargestellten Lamellen eine praktisch brauchbare Annäherung an jenen Ausblendkorridor darstellt, wie ein Vergleich der Fig. 1 und 5 ohne weiteres erkennen läßt : Vor allem verläuft die obere Grenzkurve G2 des Ausblendbereiches praktisch gleichartig wie die Bahnkurven des Besonnungsdiagramms ! Auch hier läßt sich der Ausblendbereich durch Schrägstellen der Lamellen (Neigungswinkel β in Fig. 2 gegen die Horizontale ≠ 0) soweit nach unten verschieben, daß er einen möglichst großen Bereich der Bahnkurven im Besonnungsdiagramm abdeckt. Die Grenzen eines so verschobenen Ausblendbereiches sind in Fig. 1 strichpunktiert eingezeichnet. Die Ausblendbedingung ist somit während mehrerer Tage erfüllt und zwar ohne jede Nachstellung während des Tages ! Lediglich in der Umgebung der Sommersonnenwende werden Sonnenstrahlen ganz früh und unmittelbar vor Sonnenuntergang durchgelassen. Der ganze Bereich der jahreszeitlichen Änderung der Höhenwinkel (in der Meridianebene 47°) läßt sich bei einem Ausblendbereich von 12° in derselben Ebene demnach mit nur vier Nachstellungen des Neigungswinkels β der Lamellen abdecken ! Hierzu bedarf es nicht einmal einer aufwendigen Steuerung, da einfallende Sonnenstrahlen eine rechtzeitige manuelle Nachstellung veranlassen werden.

Dieses günstige Ausblendverhalten ist nun zusätzlich gepaart mit einer — am Stand der Technik gemessen — optimalen Lichtdurchlässigkeit : Für die Hauptarbeitsstunden ist der in Fig. 5 dargestellte Ausblendbereich der Erfindung recht schmal und behindert damit den Durchtritt vor allem des hellen Zenitlichtes nur wenig. Die beschriebenen ausgezeichneten Ergebnisse werden mit einer überraschend einfachen Technik erreicht : In der in Fig. 2 dargestellten, in diesem Fall geneigten, Fensteröffnung F sind mehrere Lamellen 1 um parallele, horizontale Längsachsen L drehbar angeordnet ; die Lamellen bestehen aus einem lichtdurchlässigen, lichtbrechenden Material ; sie haben auf der Außenseite eine ebene Basisfläche 11 und weisen auf der Innenseite Prismenstäbe 10 auf, die von — vorzugsweise gleich langen — Kathetenflächen 12, 13 begrenzt sind, die ihrerseits einen Basiswinkel α von 90° einschließen (Fig. 3). Diese parallel zu den Längsachsen L verlaufenden Prismenstäbe 10 haben keinerlei verspiegelte Flächen, arbeiten also nur mit Totalreflexion.

Die Zuordnung der in den Figuren 1 und 5 verwendeten Koordinaten zu diesen Lamellen und Prismenstäben ist aus Fig. 4 ersichtlich : Repräsentativ für eine Lamelle ist dort ein einziger Prismenstab 10 dargestellt, der von einer vertikalen Azimutalebene A geschnitten wird, die mit einer Bezugsachse B einen Azimutwinkel χ einschließt. Die Bezugsachse B verläuft dabei senkrecht zur Längsachse und parallel zur Basisfläche 11 des Prismenstabes 10. Der Höhenwinkel eines Sonnenstrahles in der Azimutalebene A bezogen auf die horizontal angenommene Bezugsfläche 11 des Prismenstabes ist mit Ψ bezeichnet.

Das Ausblenddiagramm nach Fig. 5 gilt für die in Fig. 4 vorausgesetzte Anordnung des Prismenstabes mit horizontaler Basisfläche 11 und nach Süden gerichteter Bezugsachse B. Das Ausblenddiagramm gilt somit für einen Neigungswinkel β von 0° in Fig. 2. Wie schon erwähnt, verschiebt sich der Ausblendbereich bei einem von 0 abweichenden Neigungswinkel β parallel nach unten.

Form und Lage des Ausblendbereiches in Fig. 5 gelten nur für die Ausrichtung der Lamellen quer zur Nord-Süd-Richtung. Bei einer anderen Ausrichtung der Fensteröffnungen und Lamellen gelten jedoch grundsätzlich die gleichen Überlegungen und Aussagen : Es lassen sich auch hierbei die den Ausblendbereich begrenzenden Grenzkurven berechnen, die dann jedoch etwas verzerrt verlaufen. Das gleiche gilt jedoch dann auch für die Bahnkurven im Besonnungsdiagramm nach Fig. 1.

Ein weiterer Vorteil der erfindungsgemäßen Sonnenschutzeinrichtung besteht auch darin, daß sich die Lamellen — beispielsweise in der Übergangszeit — so einstellen lassen, daß gezielt Sonnenstrahlen zur Aufheizung des Raumes in diesen gelenkt werden.

**Patentansprüche**

1. Sonnenschutzeinrichtung in Form von Lamellen (1) aus lichtdurchlässigem Material, die auf der der Sonne zugewandten Seite eine Basisfläche (11) und auf der der Sonne abgewandten Seite eine prismatische Struktur haben und die in einer Fensteröffnung (F) nebeneinander um parallele Längsachsen (L) drehbar angeordnet sind, dadurch gekennzeichnet, daß die prismatische Struktur aus mindestens einem Prismenstab (10) besteht, dessen Achse parallel zur Längsachse (L) der Lamelle verläuft und dessen Querschnitt ein Dreieck ist, das von der Basisfläche (11) und zwei Kathetenflächen (12, 13) begrenzt ist, daß die Kathetenflächen (12, 13) einen Basiswinkel (α) von 90° einschließen und daß alle Flächen des Prismenstabes eben und unverspiegelt ausgebildet sind.

2. Sonnenschutzeinrichtung nach Anspruch 1, dadurch gekennzeichnet, daß jede Lamelle (1) mehrere, mit ihren Kathetenflächen (12, 13) lückenlos aneinandergrenzende Prismenstäbe (10) aufweist.

3. Sonnenschutzeinrichtung nach Anspruch 1 oder 2, dadurch gekennzeichnet, daß die Längsachsen (L) der Lamellen (1) mechanisch miteinander gekoppelt sind.

## Claims

1. A solar light shielding device in the form of plates (1) of a light-permeable material having a base surface (11) on the side facing the sun and a prismatic structure on the side facing away from the sun and which are arranged beside one another in a window opening (F) so as to be rotatable about parallel longitudinal axes (L), characterised in that the prismatic structure consists of at least one prismatic rod (10), whose axis runs parallel to the longitudinal axis (L) of the plates and whose cross-section is a triangle bounded by the base surface (11) and two mutually perpendicular surfaces (12, 13), that the mutually perpendicular surfaces (12, 13) form a base angle ($\alpha$) of 90° and that all surfaces of the prismatic rod are even and non-metallized.

2. A solar light shielding device as claimed in Claim 1, characterised in that each plate (1) has a plurality of prismatic rods (10) with contiguous mutually perpendicular surfaces (12, 13).

3. A shielding device as claimed in Claim 1 or 2, characterised in that the longitudinal axes (L) of the plates (1) are mechanically coupled to one another.

## Revendications

1. Dispositif de protection contre le soleil sous la forme de lames (1), en un matériau transparent, qui ont sur le côté tourné vers le soleil, une surface de base (11) et sur le côté éloigné du soleil, une structure prismatique et qui sont montées dans une baie, les unes à côté des autres en pouvant tourner autour d'axes longitudinaux (L) et parallèles (F), caractérisé en ce que la structure prismatique est constituée d'au moins une barre prismatique (10), dont l'axe s'étend parallèlement à l'axe longitudinal (L) des lames et dont la section transversale est un triangle délimité par la surface de base (11) et par deux surfaces latérales (12, 13), en ce que les surfaces latérales (12, 13) font un angle de base ($\alpha$) de 90° et en ce que toutes les surfaces de la barre prismatique sont planes et dépourvues de couches.

2. Dispositif de protection contre le soleil suivant la revendication 1, caractérisé en ce que chaque lame (1) présente plusieurs barres prismatiques (10) jointives, sans solution de discontinuité, par leurs surfaces latérales (12, 13).

3. Dispositif de protection contre le soleil suivant la revendication 1 ou 2, caractérisé en ce que les axes longitudinaux (L) des lames (1) sont accouplés mécaniquement les uns aux autres.

# FIG 1

FIG 2

β

FIG 3

FIG 4

# FIG 5